# EUROPEAN PATENT APPLICATION

(11) **EP 4 842 137 A1**
(43) Date of publication of application: **18.11.2026**
(21) Application number: 24915989.8
(22) Date of filing: 10.01.2024
(51) Int. Cl.: H04W 80/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN); FU, Zhe, Dongguan, Guangdong 523860 (CN); YU, Xinlei, Dongguan, Guangdong 523860 (CN)
(74) Representative: Mewburn Ellis LLP
(86) International application number: PCT/CN2024/071641
(87) International publication number: WO 2025/147912

(57) **Abstract**

A wireless communication method and a communication device are provided. The wireless communication method comprises: a first device executes a first operation, the first operation being associated with transmission of a data packet in an RLC acknowledged mode.

## Description

### TECHNICAL FIELD

The present application relates to the field of communication technologies, and more specifically, to a wireless communication method and a communication device.

### BACKGROUND

The radio link control (RLC) layer is primarily responsible for functions such as data forwarding, segmentation, retransmission, discard, and RLC re-establishment. The RLC layer has three operating modes: a transparent mode (TM), an unacknowledged mode (UM), and an acknowledged mode (AM).

In the AM, after transmitting a data packet, if a communication device receives a negative acknowledgement (NACK) message from the peer device, the communication device retransmits the data packet to ensure the reliability of data packet transmission. However, the current retransmission mechanism results in a relatively large data packet transmission delay. In particular, for certain data services with high reliability and low delay requirements, the existing AM may fail to satisfy their quality of service (QoS) requirements.

### SUMMARY

The present application provides a wireless communication method and a communication device. Various aspects involved in the present application will be introduced below.

In a first aspect, a wireless communication method is provided, which includes: performing, by a first device, a first operation; where the first operation is associated with transmission of a data packet in an RLC acknowledged mode.

In a second aspect, a communication device is provided, which includes: an execution unit configured to perform a first operation, where the first operation is associated with transmission of a data packet in an RLC acknowledged mode.

In a third aspect, a communication device is provided, which includes a transceiver, a memory, and a processor. The memory is configured to store a program, and the processor is configured to call the program from the memory and control the transceiver to receive or transmit a signal, to enable the terminal to perform the method as described in the first aspect.

In a fourth aspect, an apparatus is provided, which includes a processor, configured to call a program from a memory, to enable the apparatus to perform the method as described in the first aspect.

In a fifth aspect, a chip is provided, which includes a processor that is configured to call a program from a memory to enable a device equipped with the chip to perform the method as described in the first aspect.

In a sixth aspect, a computer-readable storage medium is provided, which has a program stored thereon, where the program enables a computer to perform the method as described in the first aspect.

In a seventh aspect, a computer program product is provided, which includes a program, where the program enables a computer to perform the method as described in the first aspect.

In an eighth aspect, a computer program is provided, where the computer program enables a computer to perform the method as described in the first aspect.

### BRIEF DESCRIPTION OF THE DRAWINGS

FIG. 1 is an exemplary diagram showing a system architecture of a wireless communication system to which embodiments of the present application can be applied.
FIG. 2 is a schematic flowchart of a data packet transmission method in the AM.
FIG. 3 is a schematic flowchart of a wireless communication method provided by the embodiments of the present application.
FIG. 4 is a schematic block diagram of a communication device provided by the embodiments of the present application.
FIG. 5 is a schematic block diagram of an apparatus provided by the embodiments of the present application.

### DETAILED DESCRIPTION

### Communication system architecture

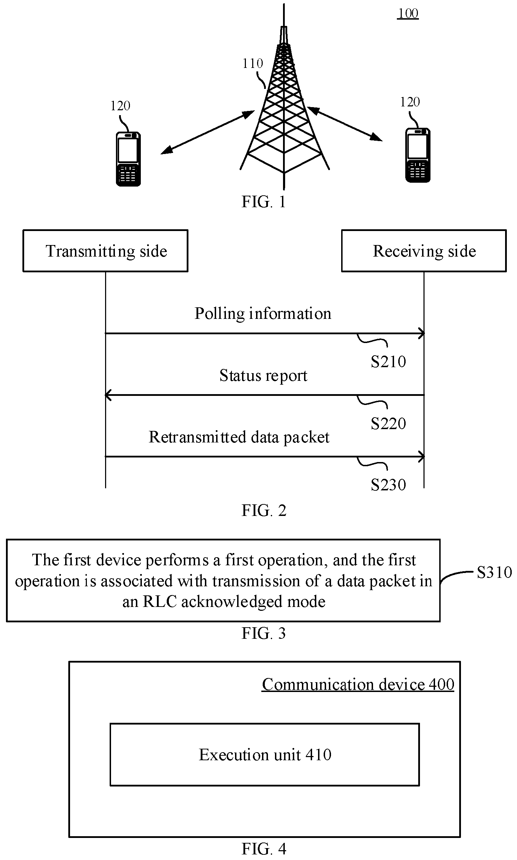

FIG. 1 is an exemplary diagram showing a system architecture of a wireless communication system 100 to which the embodiments of the present application can be applied. The wireless communication system 100 may include a network device 110 and a terminal device 120. The network device 110 may be a device that communicates with the terminal device 120. The network device 110 can provide communication coverage for a specific geographical area and can communicate with the terminal device 120 located within the coverage area.

FIG. 1 exemplarily illustrates a network device and a terminal device. Optionally, the wireless communication system 100 may include one or more network devices 110 and/or one or more terminal devices 120. For a network device 110, the one or more terminal devices 120 may all be located within the network coverage area of the network device 110, may all be located outside the network coverage area of the network device 110, or some of them may be located within the coverage area of the network device 110 while others are located outside the coverage area of the network device 110, which will not be limited in the embodiments of the present application.

Optionally, the wireless communication system 100 may further include a network controller, a mobility management entity and other network entities, which will not be limited in the embodiments of the present application.

It should be understood that the technical solutions in the embodiments of the present application may be applied to various communication systems, such as a 5th generation (5G) system or new radio (NR), a long term evolution (LTE) system, an LTE frequency division duplex (FDD) system, and an LTE time division duplex (TDD). The technical solutions provided in the present application may also be applied to future communication systems, such as a 6th generation mobile communication system and a satellite communication system.

The terminal device in the embodiments of the present application may also be referred to as a user equipment (UE), an access terminal, a user unit, a user station, a mobile station (MS), a mobile terminal (MT), a remote station, a remote terminal device, a mobile device, a user terminal, a wireless communication device, a user agent, or a user apparatus. The terminal device in the embodiments of the present application may refer to a device that provides voice and/or data connectivity to a user, and can be used to connect people, things, and machines, such as a handheld device with wireless connection capabilities and an in-vehicle device. The terminal device in the embodiments of the present application may be a mobile phone, a pad, a laptop computer, a handheld computer, a mobile internet device (MID), a wearable device, a vehicle, a wireless terminal in industrial control, a wireless terminal in self-driving, a wireless terminal in remote medical surgery, a wireless terminal in smart grid, a wireless terminal in transportation safety, a wireless terminal in smart city, and a wireless terminal in smart home. For example, the terminal device may act as a scheduling entity that provides sidelink signals between terminal devices in vehicle-to-everything (V2X) or device-to-device (D2D) communication. For instance, a cellular phone and a vehicle communicate with each other using sidelink signals. A cellular phone may communicates directly with a smart home device, i.e., without requiring the base station to relay communication signals. Optionally, a terminal device may be used to act as a base station.

The network device in the embodiments of the present application may be a device used for communicating with terminal devices. The network device may also be referred to as an access network device or a wireless access network device, for example, the network device may be a base station. The network device in the embodiments of the present application may refer to a radio access network (RAN) node (or device) that connects the terminal device to a wireless network. The base station can broadly cover or be substituted with various names such as: a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a baseband unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node, or a combination thereof. The base station may also refer to the communication module, modem, or chip installed within the above device or apparatus. The base station may also be a mobile switching center and a device that functions as a base station in D2D, V2X, or machine-to-machine (M2M) communication, a network-end device in a 6G network, a device that functions as a base station in a future communication system, or the like. The base station may support networks of the same or different access technologies. The specific technology and device form adopted by the network device will not be limited in the embodiments of the present application.

The base station may be fixed or mobile. For example, a helicopter or unmanned aerial vehicle may be configured to act as a mobile base station, and one or more cells may move according to the position of the mobile base station. In other examples, the helicopter or unmanned aerial vehicle may be configured to act as a device that communicates with another base station.

In some deployments, the network device in the embodiments of the present application may refer to the CU or the DU; alternatively, the network device includes the CU and the DU. The gNB may further include the AAU.

The network device and the terminal device may be deployed on the ground, including indoor or outdoor, handheld or in-vehicle; or the network device and the terminal device may be deployed on water; or the network device and the terminal device may be deployed on an airplane, a balloon, or a satellite in air. The embodiments of the present application do not impose limitations on the scenarios where the network device and the terminal device are located.

### RLC layer

The RLC layer is located between a packet data convergence protocol (PDCP) layer and a media access control (MAC) layer. The RLC communicates with the PDCP layer via an RLC channel and communicates with the MAC layer via a logical channel. The RLC layer is primarily responsible for functions such as data forwarding, segmentation, retransmission, discard, and RLC re-establishment. The functions of the RLC layer are implemented by an RLC entity, and the RLC entity is created in a case where an RLC bearer is established and deleted in a case where the RLC bearer is released. Each RLC entity may be configured by a radio resource control (RRC) layer and has three operating modes: a transparent mode (TM), an unacknowledged mode (UM), and an acknowledged mode (AM).

TM may also be referred to as a transparent transmission mode. For an RLC entity using the TM, data is transparent, and the RLC entity does not make any modifications to the data (e.g., it does not segment an RLC service data unit (SDU) or add any header information to it). The TM entity consists of only a transmission buffer for storing RLC SDUs, and a sole function of the transmission buffer is to buffer and forward data. When the MAC layer notifies the TM entity that there is a transmission opportunity, the TM entity transmits an RLC SDU from the transmission buffer directly to the MAC layer without any modification.

The UM provides an unreliable service. When a UM entity receives a data packet from a higher layer, the UM entity generates an unacknowledged mode data (UMD) protocol data unit (PDU) (which includes header information) for each RLC SDU and buffers the generated UMD PDU in a transmission buffer. When the MAC layer notifies the UM entity to transmit an RLC PDU, the UM entity, if necessary, segments certain RLC SDUs and regenerates the RLC header and RLC PDU so that the total size of the finally transmitted RLC PDU is equal to the total size indicated by the MAC layer. In the UM, the transmitting side is only responsible for transmitting the data and is not responsible for ensuring successfully data reception at the receiving side. After receiving the data, the receiving side does not transmit any acknowledgment message to the transmitting side regarding whether the data was correctly received. Therefore, the UM can deliver data packets in sequence to the peer entity with the shortest delay. The UM is mainly applicable to services that are delay-sensitive but allow a certain packet loss rate, such as voice over new radio (VoNR).

The AM provides a reliable service. Compared with the UM, the main difference between the AM and the UM is that AM has an automatic repeat request (ARQ) error correction function in addition to the UM function. That is, after transmitting a data packet, the transmitting side needs to wait for acknowledgement information replied by the receiving side regarding whether the data packet was correctly received. In a case of a negative acknowledgement, the transmitting side needs to retransmit the unsuccessfully received data packet. Therefore, the AM can provide reliable data transmission for upper layers, thereby ensuring that data is correctly and sequentially delivered to the peer entity. The AM is mainly applicable to services that are delay-insensitive but error-sensitive services, such as a file transfer protocol (FTP) service.

An AM entity has a transmission buffer and a retransmission buffer at the transmitting side. The transmission buffer can buffer RLC SDUs received from an upper layer (e.g., the PDCP), and the retransmission buffer can buffer RLC SDUs that have been transmitted but not yet acknowledged. The receiving side may include a reception buffer, so that RLC PDUs received from a lower layer, if within the receiving window, can be placed in the reception buffer before processing.

In the AM, the transmitting side of the AM entity needs to maintain the following state variables.

TX_NEXT_Ack, with an initial value of 0: TX_NEXT_Ack may hold the value of the SN of the next RLC SDU for which a positive acknowledgement is to be received in sequence, and the value may serve as the lower edge of the transmitting window. The transmitting window is [TX_Next_Ack, TX_Next_Ack + AM_Window_Size].

TX_NEXT, with an initial value of 0; TX_NEXT may hold the value of the SN to be assigned to the next newly generated acknowledged mode data (AMD) protocol data unit (PDU), that is to say, SN satisfying TX_Next_Ack<=SN<TX_Next have already been assigned. If the upper layer transmits a large number of RLC SDUs instantaneously, the TX_Next value may exceed the transmitting window. TX_NEXT typically serves as the higher edge of the transmitting window.

POLL_SN, with an initial value of 0; if the timer t-PollRetransmit Timer is not active, the value of POLL_SN does not make much sense. When t-PollRetransmit Timer is active, the value is set to the maximum SN of the RLC SDU among the RLC SDUs that have been transmitted.

In the AM, the receiving side of the AM entity needs to maintain the following state variables:
RX_Next, with an initial value of 0: RX_Next may hold a value of the SN following the last in-sequence completely received RLC SDU, and it may serve as the lower edge of the receiving window. The receiving window is [RX_Next, RX_Next + AM_Window_Size].
RX_Highest_Status, with an initial value of 0: RX_Highest_Status denotes the highest possible value that can be set for ACK_SN in the current status report. It should be understood that, at the receiving side, if RLC SDUs fall within the range of [TX_Next_Ack, ACK_SN], they are indicated as either ACKED or NACKED.
RX_Next_Status_Trigger: this state variable may hold the value of the SN following an SN of the RLC SDU that triggered t-Reassembly.
RX_Next_Highest, with an initial value of 0: RX_Next_Highest may hold the value of the SN following the SN of the RLC SDU with the highest SN among the received RLC SDUs.

Retransmission: when the transmitting side receives a NACK feedback from the receiving side for data with a certain SN, the transmitting side performs a retransmission.

Status report: at the RLC layer, an explicit acknowledgement is not performed for each RLC SDU as that would bring significant overhead. The receiving side typically transmits the status report for a plurality of RLC SDUs to reduce overhead. The condition for triggering the receiving side to transmit a status report include one or more of the following conditions: the receiving side receives polling information transmitted by the transmitting side; or the reassembly timer (t-Reassembly Timer) or status prohibit timer (t-StatusProhibit) at the receiving side expires.

It should be noted that t-Reassembly is used by the RLC entity to detect packet loss in lower layer transmission. When a hole (i.e., discontinuity in the SNs corresponding to the received data packets) appears in the receiving window of the receiving-side RLC entity, the RLC entity starts the timer. When the hole in the receiving window is filled, the timer is stopped and reset. When the timer exceeds the time corresponding to t-Reassembly, the receiving-side RLC entity triggers an RLC status report and transmits the RLC status report to the transmitting-side RLC entity.

The t-StatusProhibit is used to control the frequency of transmitting RLC status reports. When the receiving-side RLC entity triggers the RLC status report, if the timer corresponding to t-StatusProhibit is not running, the receiving-side RLC entity delivers the status report to the lower layer for transmission when receiving a transmission opportunity indicated by the lower layer, and starts the timer. If the receiving-side RLC entity triggers the RLC status report and the timer is running, the receiving-side RLC entity needs to wait until the timer expires, i.e., t-StatusProhibit timeout, before transmitting the RLC status report and restarting the timer.

Polling: when transmitting each RLC_SDU/RLC_SDU segment, the transmitting side maintains two counters, i.e., a PDU_WITHOUT_POLL counter and a BYTE_WITHOUT_POLL counter. PDU_WITHOUT_POLL is a counter initially set to 0 and counts the number of AMD PDUs that have been transmitted since the last transmission of a poll bit, so as to trigger polling based on the number of transmitted data packets. When PDU_WITHOUT_POLL is greater than or equal to PollPDU, the transmitting side transmits polling information to the receiving side, for example, a polling bit can be set in the header of the RLC_SDU (segment) to be transmitted. BYTE_WITHOUT_POLL is a counter initially set to 0 and counts the number of data bytes that have been transmitted since the last transmission of a poll bit, so as to trigger polling based on the number of transmitted bytes. When BYTE_WITHOUT_POLL is greater than or equal to PollByte, the transmitting side sets a polling bit in the header of the RLC_SDU (segment) to be transmitted.

It should be noted that PollPDU and PollByte may be parameters configured by the RRC. PollPDU may refer to a parameter used by the transmitting side to trigger a poll for every polling data packet (PDU), while PollByte may refer to a parameter used by the transmitting side to trigger a poll for every polling byte (Byte). If the transmitting side of the LTE AM RLC entity is a UE, the UE is configured with PollPDU and PollByte by receiving PollPDU and PollByte from the network (e.g., a BS) via RRC signaling. If the transmitting side of the AM RLC entity is a terminal device, the terminal device may receive configuration information from the network device side via RRC signaling, and the configuration information is used to configure polling threshold parameters such as PollPDU and PollByte.

In some embodiments, the wireless communication method provided by the embodiments of the present application mainly involves a data packet transmission method in the RLC AM. The data packet transmission method in the AM is introduced in detail below with reference to FIG. 2.

As illustrated in FIG. 2, the data packet transmission method in the RLC AM may include steps S210 to S230.

In Step S210, a polling mechanism is implemented. When PDU_WITHOUT_POLL is greater than or equal to PollPDU or BYTE_WITHOUT_POLL is greater than or equal to PollByte, the transmitting side may transmit polling information to the receiving side.

In Step S220, a status report feedback mechanism is implemented. In response to receiving the polling information and/or t-Reassembly timer at the receiving side, and/or the expiration of the t-StatusProhibit timer, the receiving side transmits a status report of the AMD PDUs to the transmitting side.

In Step S230, a retransmission mechanism is implemented. Based on the NACK information in the above status report, the transmitting side retransmits the data packets that the receiving side failed to receive to the receiving side.

Based on the above description, it can be seen that in the AM, after the transmitting side transmits a data packet, if the transmitting side receives a status report (including the NACK information for the data packet) fed back from the receiving side, the transmitting side will perform data packet retransmission to ensure the reliability of data packet transmission. However, the transmitting side needs to transmit polling information to the receiving side and must wait for the receiving side to feed back a status report before performing data packet retransmission, which results in a large data packet transmission delay. Especially for some data services with high-reliability and low-delay requirements, the existing AM may not be able to satisfy their QoS requirements.

To address the above problem, the embodiments of the present application will be introduced below.

FIG. 3 is a schematic flowchart of a wireless communication method proposed in the embodiments of the present application. The method illustrated in FIG. 3 may be performed by a first device. The first device may perform data transmission with a second device. The first device and the second device may be any type of devices supporting wireless communication, and the first device and the second device are peer devices to each other. The first device may be the transmitting side, and the second device may be the receiving side; or the first device may be the receiving side, and the second device may be the transmitting side. For example, the first device may be the network device 110 or the terminal device 120 mentioned in FIG. 1. For example, the second device may be the terminal device 120 or the network device 110 mentioned in FIG. 1.

Referring to FIG. 3, in Step S310, the first device performs a first operation. The first operation is associated with an RLC acknowledged mode. Alternatively, the first operation may be associated with transmission of a data packet in the RLC acknowledged mode.

In some implementations, the first operation may be associated with the retransmitted data packet illustrated in FIG. 2. For example, the first operation may include retransmitting a first data packet in a case where no negative acknowledgement for the first data packet is received. The first operation may be referred to as a blind retransmission operation. That is, to accelerate retransmission, the first device may blindly retransmit the first data packet in a case where it does not receive a status report (including NACK information) fed back from the second device.

In some implementations, the first operation may be associated with Step S210 illustrated in FIG. 2. For example, the first operation may include modifying parameters for triggering polling at the first device to accelerate transmitting polling information to the second device.

In some implementations, the first operation may be associated with Step S220 illustrated in FIG. 2. For example, the first operation may refer to modifying parameters for triggering transmission of the status report at the first device (where the first device is the receiving side in this case) to accelerate transmitting the status report to the second device (where the second device is the transmitting side in this case).

Three acceleration mechanisms for reducing transmission delay of data packets in the RLC AM described above will be introduced in detail below with reference to examples.

### Accelerated retransmission mechanism

The first operation includes retransmitting a first data packet in a case where no negative acknowledgment for the first data packet is received. The first operation may be triggered based on a first condition, and the first condition is associated with one or more of: a remaining delay of the first data packet; a priority of the first data packet; reliability of the first data packet; indication information transmitted by an upper layer of an RLC layer; a type of a radio bearer associated with the first data packet; channel measurement information; capability information of a transmitting device of the first data packet; capability information of a receiving device of the first data packet; indication information transmitted by a network device; whether packet duplication is configured for the first data packet; or indication information transmitted by an MAC layer.

In some implementations, the first condition may be that the remaining delay of the first data packet is less than or equal to a first threshold. That is, as long as the remaining delay of the first data packet is less than or equal to the first threshold, the first device is triggered to retransmit the first data packet. Compared to the conventional solution where data packet retransmission is triggered only upon receiving negative feedback from the receiving side, this proposed solution helps to accelerate the retransmission of the first data packet and reduce the transmission delay of data packets in the AM. The configuration of the first threshold is associated with one or more of the following information: the remaining delay of the first data packet; the priority of the first data packet; the reliability of the first data packet; the type of the radio bearer associated with the first data packet; or channel measurement information. The first threshold may be determined through one or more of the following manners: pre-defined by a protocol, configured by a network device or pre-configured. The first threshold may be a positive number, such as 2 ms.

In some implementations, the priority information of the first data packet may be obtained from an upper layer of the first device (e.g., the RRC layer, the PDCP layer, or the NAS layer). The priority information of the first data packet may refer to the priority information of QoS flows associated with the first data packet, for example, the priority information of the first data packet may refer to the highest value of the priority information of the QoS flows associated with the first data packet (i.e., the highest priority). If the first data packet has a high priority (i.e., is relatively important), the first device can perform blind retransmission of the first data packet in a case where no status report fed back from the second device is received, thereby helping to reduce the transmission delay of data packets in the AM. That is, the first condition may be that the priority of the first data packet is greater than or equal to a second threshold. The configuration of the second threshold is associated with one or more of the following information: the remaining delay of the first data packet; the priority of the first data packet; the reliability of the first data packet; the type of the radio bearer associated with the first data packet; or channel measurement information. The second threshold may be determined through one or more of the following manners: pre-defined by a protocol, configured by a network device or pre-configured.

In some implementations, the reliability of the first data packet may be obtained from an upper layer of the first device (e.g., the RRC layer, the PDCP layer, or the NAS layer). The reliability of the first data packet may refer to reliability indicator information of QoS flows associated with the first data packet, for example, the reliability of the first data packet may refer to the highest reliability indicator information of the QoS flows associated with the first data packet (i.e., the highest reliability requirement). If the first data packet has a high reliability requirement, the first device can perform blind retransmission of the first data packet in a case where no status report fed back from the second device is received, thereby helping to reduce the transmission delay of data packets in the AM. That is, the first condition may be that the reliability requirement of the first data packet is greater than or equal to a third threshold. The configuration of the third threshold is associated with one or more of the following information: the remaining delay of the first data packet; the priority of the first data packet; the reliability of the first data packet; the type of the radio bearer associated with the first data packet; or channel measurement information. The third threshold may be determined through one or more of the following manners: pre-defined by a protocol, configured by a network device or pre-configured.

In some implementations, the above reliability indicator information of the first data packet may be determined based on a packet error ratio (PER), which may be, for example, a PDCP packet error ratio.

In some implementations, the first device (the transmitting side) may perform blind retransmission as indicated by an upper layer (the PDCP layer or the RRC layer) to the RLC layer without waiting for a status report, thereby helping to reduce the transmission delay of data packet in the AM. That is, the first condition may be that the upper layer of the RLC layer indicates the RLC layer to perform retransmission. In some embodiments, the upper layer may indicates the RLC layer to perform blind retransmission of the first data packet according to information such as the importance and the delay requirement of the first data packet.

In some implementations, if the first data packet is a data packet of a data radio bearer (DRB) or signaling radio bearer (SRB), the first device may perform blind retransmission of the first data packet without waiting for a status report, thereby helping to reduce the transmission delay of data packets in the AM. That is, the first condition may be that the first data packet is a data packet associated with a key signaling SRB. Certainly, the first condition may also be that the first data packet is a data packet associated with a DRB.

In some implementations, the first condition may be that the first data packet is a data packet associated with a target radio bearer in a split bearer. The target radio bearer may refer to a primary path radio bearer in the split bearer, and the first data packet may be a data packet on the primary path radio bearer in the split bearer. Certainly, the target radio bearer may also refer to a secondary path radio bearer in the split bearer. In some embodiments, if the first data packet is a data packet on the above primary path radio bearer, the first device may perform blind retransmission of the first data packet, thereby helping to reduce the transmission delay of data packets in the AM.

In some implementations, the first device may determine whether to perform blind retransmission based on channel measurement information for the transmission of the first data packet (e.g., including information such as channel quality or channel busy rate). If the channel quality is poor and/or the channel busy rate is low, the first device may perform blind retransmission of the first data packet without waiting for a status report, thereby helping to reduce the transmission delay of data packets in the AM.

In some embodiments, the first condition may be that the channel quality of the first data packet is less than or equal to a fourth threshold. The channel quality of the first data packet may be determined based on one or more of the following channel parameters: reference signal receiving power (RSRP), reference signal receiving quality (RSRQ), a signal noise ratio (SNR), or a signal to interference plus noise ratio (SINR). It should be understood that the configuration of the fourth threshold is associated with one or more of the following information: the remaining delay of the first data packet; the priority of the first data packet; the reliability of the first data packet; the type of the radio bearer associated with the first data packet; or the channel measurement information. The fourth threshold may be determined through one or more of the following manners: pre-defined by a protocol, configured by a network device or pre-configured.

In other embodiments, the first condition may be that the channel busy rate is less than or equal to a fifth threshold. The channel busy rate of the first data packet may be determined based on one or more of the following channel parameters: a channel busy ratio (CBR) or a channel occupancy ratio (CR). It should be understood that the configuration of the fifth threshold is associated with one or more of the following information: the remaining delay of the first data packet; the priority of the first data packet; the reliability of the first data packet; the type of the radio bearer associated with the first data packet; or the channel measurement information. The fifth threshold may be determined through one or more of the following manners: pre-defined by a protocol, configured by a network device or pre-configured.

In some implementations, the first device (the transmitting side) may determine whether to adopt the blind retransmission mechanism based on capability information of the first device (e.g., whether the first device supports the blind retransmission) and capability information of the second device (the receiving side) (e.g., whether the second device supports the blind retransmission). In some embodiments, the first condition may be that the transmitting device of the first data packet supports retransmitting the first data packet in a case where no negative acknowledgment for the first data packet is received. The first condition may also be that the receiving device of the first data packet supports receiving a retransmitted data packet of the data packet in a case where no negative acknowledgment for the first data packet is transmitted. It should be understood that the first device may report the capability information of the first device to the network, or the network device may transmit indication message to the first device to indicate the capability information of the first device. The second device may report the capability information of the second device to the network, or the network device may transmit indication message to the second device to indicate the capability information of the second device.

In some implementations, the first device may perform blind retransmission of the first data packet as indicated by the network device without waiting for a status report, thereby helping to reduce the transmission delay of data packets in the AM. In some embodiments, the first condition may be that the first data packet is a data packet corresponding to first configuration information transmitted by the network device, where the first configuration information is used to configure data packets that are allowed to be retransmitted in a case where no negative acknowledgment is received. In some embodiments, the first configuration information is used to configure one or more of the following: that a data packet corresponding to a first radio bearer (e.g., the number of the first radio bearer) is allowed to be retransmitted in a case where no negative acknowledgment is received, where the first radio bearer may be, for example, the SRB; that a data packet corresponding to a first RLC channel (e.g., the number of the RLC channel) is allowed to be retransmitted in a case where no negative acknowledgment is received, where the first RLC channel may be any RLC channel; or that a data packet corresponding to a first sequence number (SN) is allowed to be retransmitted in a case where no negative acknowledgment is received.

In some embodiments, the first configuration information may be carried in a first message transmitted by the network device, and the first message includes one or more of the following messages: an RRC message, an MAC CE message, a downlink control information (DCI) message, or an RLC control PDU message.

In some implementations, the first device (the transmitting side) may determine whether to perform blind retransmission of the first data packet based on whether the first device is configured with the redundant transmission mechanism for the first data packet (also referred to as a packet duplication mechanism, that is, the first device will transmit the first data packet twice by default). For example, if the first device is configured with packet duplication, in order to reduce retransmission resources, the first device may not perform the blind retransmission of the first data packet. If the first device is not configured with packet duplication, in order to improve the reliability of the data transmission, the first device may perform the blind retransmission of the first data packet, thereby reducing the transmission delay of data packets in the AM. In some embodiments, the first condition may be that packet duplication is not configured for the first data packet.

In some implementations, the first device (the transmitting side) may further determine whether to perform the blind retransmission of the first data packet based on available resources at the MAC layer. If the MAC layer indicates that there are available resources, the first device may perform the blind retransmission of the first data packet. In some embodiments, the first condition may be that the indication information transmitted by the MAC layer indicates that there are available resources at the MAC layer.

It should be noted that the first condition in any of the above embodiments may be combined with the first condition in any other of the above embodiments to create a new embodiment, and the present application does not impose specific limitations thereon. For example, the first condition may be that the channel quality of the first data packet is less than or equal to a fourth threshold, and that the channel busy rate is less than or equal to a fifth threshold. When such a first condition is satisfied, the first device performs the blind retransmission of the first data packet. As another example, the first condition may be that the remaining delay of the first data packet is less than or equal to a first threshold, that the priority of the first data packet is greater than or equal to a second threshold, and that the reliability of the first data packet is greater than or equal to a third threshold. When such a first condition is satisfied, the first device performs the blind of the first data packet. By analogy, the present application may combine more or fewer of the above first conditions, which will not be described in detail here.

Under the blind retransmission mechanism, the present application considers that continuous blind retransmissions will occupy a significant amount of transmission resources; therefore, the number of blind retransmissions of the first data packet should not be excessive. In some implementations, in a case where no negative acknowledgment (NACK) is received, if the number of retransmissions of the first data packet is greater than or equal to a sixth threshold, the first device waits for feedback information for the first data packet. The configuration of the sixth threshold is associated with one or more of the following information: the remaining delay of the first data packet; the priority of the first data packet; the reliability of the first data packet; the type of the radio bearer associated with the first data packet; the channel measurement information; or the number of retransmissions of the first data packet in a case where no negative acknowledgment is received. The sixth threshold may be determined through one or more of the following manners: pre-defined by a protocol, configured by a network device or pre-configured.

In some implementations, the first operation includes prioritizing transmission of a data packet with a smaller remaining delay. As an example, the first operation includes: if a remaining delay of a second data packet is less than a remaining delay of a third data packet, prioritizing transmission of the second data packet; where the second data packet and the third data packet are two retransmitted data packets; the second data packet and the third data packet are two newly transmitted data packets; or one of the second data packet and the third data packet is a retransmitted data packet, and the other is a newly transmitted data packet.

Under the blind retransmission mechanism, the present application further takes into account that a radio link failure (RLF) may occur. In some embodiments, whether an RLF occurs can be determined based on the number of retransmissions of the first data packet. For example, whether an RLF occurs may be determined based on the number of times the second device (the receiving side) feeds back NACK information for the first data packet; alternatively, whether an RLF occurs may be determined based on the number of retransmissions of the first data packet performed by the first device in a case where the second device (the receiving side) feeds back NACK information for the first data packet. In addition, a larger RLF determination threshold may be set to ensure the reliability of RLF determination.

In some implementations, based on the above considerations, if a second condition is satisfied, the first device (the transmitting side) may determine that an RLF occurs. The second condition includes one or more of the following conditions: the number of retransmissions of the first data packet is greater than or equal to a seventh threshold, where the seventh threshold is greater than an eighth threshold, the eighth threshold is used to determine whether an RLF occurs, and the eighth threshold is a threshold for the number of retransmissions in a case where a negative acknowledgment for a data packet is received; the number of retransmissions of the first data packet is greater than or equal to a ninth threshold, and the number of retransmissions is the number of retransmissions in a case where a negative acknowledgment for the first data packet is received; the number of negative acknowledgments corresponding to the first data packet is less than or equal to a tenth threshold.

It should be noted that the configuration of the seventh threshold is associated with one or more of the following information: the remaining delay of the first data packet; the priority of the first data packet; the reliability of the first data packet; the type of the radio bearer associated with the first data packet; the channel measurement information; the number of retransmissions of the first data packet in a case where no negative acknowledgment is received; or the number of negative acknowledgments corresponding to the first data packet. The seventh threshold may be determined through one or more of the following manners: pre-defined by a protocol, configured by a network device or pre-configured.

The configuration of the eighth threshold is associated with one or more of the following information: the remaining delay of the first data packet; the priority of the first data packet; the reliability of the first data packet; the type of the radio bearer associated with the first data packet; the channel measurement information; the number of retransmissions of the first data packet in a case where no negative acknowledgment is received; or the number of negative acknowledgments corresponding to the first data packet. The eighth threshold may be determined through one or more of the following manners: pre-defined by a protocol, configured by a network device or pre-configured.

The configuration of the ninth threshold is associated with one or more of the following information: the remaining delay of the first data packet; the priority of the first data packet; the reliability of the first data packet; the type of the radio bearer associated with the first data packet; the channel measurement information; the number of retransmissions of the first data packet in a case where no negative acknowledgment is received; or the number of negative acknowledgments corresponding to the first data packet. The ninth threshold may be determined through one or more of the following manners: pre-defined by a protocol, configured by a network device or pre-configured.

The configuration of the tenth threshold is associated with one or more of the following information: the remaining delay of the first data packet; the priority of the first data packet; the reliability of the first data packet; the type of the radio bearer associated with the first data packet; the channel measurement information; the number of retransmissions of the first data packet in a case where no negative acknowledgment is received; or the number of negative acknowledgments corresponding to the first data packet. The tenth threshold may be determined through one or more of the following manners: pre-defined by a protocol, configured by a network device or pre-configured.

### Fast polling mechanism

Under a polling mechanism in the AM, if a remaining delay of a data packet is relatively short and no NACK information feedback is received, the first device may transmit polling information to the second device in advance to accelerate the second device in feeding back a status report, thereby helping to reduce the transmission delay of data packets in the RLC AM. In some implementations, the polling information in the AM may be triggered based on a third condition. The third condition may be associated with a remaining delay of a fourth data packet, the fourth data packet is a packet that has been transmitted by the first device, and the first device has not received feedback information for the fourth data packet. The remaining delay of the fourth data packet is less than or equal to an eleventh threshold.

It should be noted that the configuration of the eleventh threshold is associated with one or more of the following information: the remaining delay of the fourth data packet; a priority of the fourth data packet; reliability of the fourth data packet; a type of a radio bearer associated with the fourth data packet; channel measurement information; the number of retransmissions of the fourth data packet in a case where no negative acknowledgment is received; the number of negative acknowledgments corresponding to the fourth data packet; or whether packet duplication is configured for the fourth data packet. The eleventh threshold may be determined through one or more of the following manners: pre-defined by a protocol, configured by a network device or pre-configured.

It should be understood that the fourth data packet is similar to the above first data packet. The associated parameters, such as the radio bearer associated with the fourth data packet, the priority of the fourth data packet, the channel measurement information, or whether packet duplication is configured for the fourth data packet, are similar to the parameter information of the first data packet described in the accelerated retransmission mechanism section, and reference may be made to the description in the accelerated retransmission mechanism section. For example, the radio bearer associated with the fourth data packet may be the DRB or SRB. As another example, the priority of the fourth data packet may be greater than or equal to the second threshold, which will not be described in detail here.

The present application does not impose specific limitations on triggering parameters for the third condition. As an example, the third condition is triggered only when the fourth data packet is an data packet of the SRB and the remaining delay of the fourth data packet is less than or equal to the eleventh threshold. As another example, the third condition is triggered only when the channel quality of the fourth data packet is less than or equal to the fourth threshold and the remaining delay of the fourth data packet is less than or equal to the eleventh threshold. As yet another example, the third condition is triggered only when the channel quality of the fourth data packet is less than or equal to the fourth threshold, the channel busy rate of the fourth data packet is less than or equal to the fifth threshold, and the remaining delay of the fourth data packet is less than or equal to the eleventh threshold.

In some implementations, the polling information may be triggered based on a first counter, the first counter is used to record the number of unpolled PDUs and/or the number of unpolled bytes, and the parameter value of the first counter may be associated with a service type and/or a remaining delay of a data packet. The first counter may be a PDU_WITHOUT_POLL counter or a BYTE_WITHOUT_POLL counter. In the embodiments of the present application, the first device may modify the parameter of the first counter (e.g., PollPDU and/or PollByte) based on the service type and/or the remaining delay of the data packet, to enable the first device to accelerate the transmission of polling information to the second device, thereby helping to reduce the transmission delay of data packets in the AM.

As an example, if a service type of a current data packet is a high-reliability and low-delay service and/or the remaining delay of the current data packet is less than or equal to a certain threshold (e.g., the first threshold), the parameter of the first counter (PollPDU and/or PollByte) may be adjusted from a first parameter (a first PollPDU and/or first PollByte) to a second parameter (a second PollPDU and/or second PollByte), where the second PollPDU is less than the first PollPDU, and the second PollByte is less than the first PollByte. In this way, a trigger condition (e.g., PDU_WITHOUT_POLL >= PollPDU or BYTE_WITHOUT_POLL >= PollByte) for the first device to transmit polling information to the second device is more easily satisfied, thereby helping to reduce the transmission delay of data packets in the AM.

In some implementations, the parameter value of the first counter includes a plurality of candidate values, and a current parameter value of the first counter is determined from the plurality of candidate values based on a remaining delay of a data packet. In an example where the parameter of the first counter is PollPDU, the plurality of candidate values may include a first PollPDU and a second PollPDU, where the second PollPDU is less than the first PollPDU. If the remaining delay of the data packet is less than or equal to a certain threshold (e.g., the first threshold), it indicates that the data is relatively urgent, and the parameter value of the first counter may adopt the second PollPDU to quickly trigger the transmission of polling information. If the remaining delay of the data packet is greater than a certain threshold (e.g., the first threshold), it indicates that the data is not urgent, and the parameter value of the first counter may adopt the first PollPDU to trigger the transmission of polling information at a normal speed.

In some implementations, the above plurality of candidate values are a plurality of candidate values configured for a radio bearer (e.g., the SRB or DRB).

In some implementations, the network device may transmit a second message to the first device, where the second message is used to indicate the first device to transmit polling information. That is, the polling information is transmitted based on an indication from the network device. The second message includes one or more of the following messages: an RRC message, an MAC CE message, a DCI message, or an RLC control PDU message.

In one implementation, the polling information may be associated with a first timer, and the first timer is configured to trigger the transmission of the polling information. For example, a polling permission timer (the first timer) may be defined, and the first timer is started when the polling information is currently transmitted. If the first timer expires, polling signaling may be transmitted again. It should be understood that, before the first timer expires, if the first device transmits polling signaling again, the first timer is reset.

### Accelerated status report feedback mechanism

It should be noted that in the embodiments of the mechanism for accelerating status report transmission, the first device is the transmitting side, and the second device is the receiving side.

Under the status report feedback mechanism in the AM, the first device (the receiving side) may transmit a status report to the second device in advance based on information such as whether a data packet reception failure is detected, and the number of data packets that failed to be received or an amount of data that failed to be received, thereby helping to reduce the transmission delay of data packets in the RLC AM.

In some implementations, the status report in the AM may be triggered based on a fourth condition, and the fourth condition is associated with one or more of the following: whether a data packet reception failure is detected; the number of data packets that failed to be received; an amount of data that failed to be received; or a second timer configured to trigger transmission of a status report.

In some embodiments, the fourth condition may be that the first device detects a data packet reception failure. That is, when the first device detects a data packet reception failure, the first device may immediately transmit a status report to the second device to reduce the transmission delay of data packets in the RLC AM.

In some other embodiments, if the number of data packets (e.g., PDU packets) that failed to be received by the first device is greater than or equal to a twelfth threshold, the first device may transmit the status report to the second device, so as to balance reducing the transmission resource overhead of the status report at the first device and reducing the transmission delay of data packets in the RLC AM. That is, the fourth condition may be that the number of data packets that failed to be received is greater than or equal to the twelfth threshold. The configuration of the twelfth threshold is associated with one or more of the following information: the remaining delay of the data packet; the priority of the data packet; the reliability of the data packet; the type of the radio bearer associated with the data packet; the channel measurement information; the number of retransmissions of the data packet in a case where no negative acknowledgment is received; the number of negative acknowledgments corresponding to the data packet; the channel measurement information; whether packet duplication is configured for the data packet; whether the data packet reception failure is detected; the number of data packets that failed to be received; or the amount of data that failed to be received. The twelfth threshold may be determined through one or more of the following manners: pre-defined by a protocol, configured by a network device or pre-configured.

In still other embodiments, if the amount of data (e.g., the number of bytes) that failed to be received by the first device is greater than or equal to a thirteenth threshold, the first device may transmit a status report to the second device to reduce the transmission delay of data packets in the RLC AM. That is, the fourth condition may be that the amount of data that failed to be received is greater than or equal to the thirteenth threshold. The configuration of the thirteenth threshold is associated with one or more of the following information: the remaining delay of the data packet; the priority of the data packet; the reliability of the data packet; the type of the radio bearer associated with the data packet; the channel measurement information; the number of retransmissions of the data packet in a case where no negative acknowledgment is received; the number of negative acknowledgments corresponding to the data packet; the channel measurement information; whether packet duplication is configured for the data packet; whether the data packet reception failure is detected; the number of data packets that failed to be received; or the amount of data that failed to be received. The thirteenth threshold may be determined through one or more of the following manners: pre-defined by a protocol, configured by a network device or pre-configured.

In some implementations, the fourth condition may be that the second timer expires, and the second timer may include a reassembly timer (t-Reassembly Timer) and/or a status prohibit timer (t-StatusProhibit). When the second timer expires, the first device may transmit the status report to the second device.

In some implementations, the status report is triggered based on a third timer, and a parameter value of the third timer is associated with a service type. The third timer may be a reassembly timer (t-Reassembly Timer) and/or a status prohibit timer (t-StatusProhibit). In the embodiments of the present application, the first device may modify a parameter of the third timer (e.g., a timing parameter) based on the service type, to enable the first device to accelerate the transmission of the status report to the second device, thereby helping to reduce the transmission delay of data packets in the AM.

As an example, if the service type of the current data packet is a high-reliability and low-delay service, the parameter of the third timer may be adjusted from a first parameter (a first timing parameter) to a second parameter (a second timing parameter), where the second parameter is smaller than the first parameter. In this way, the trigger condition (e.g., the timing duration of the third timer is greater than or equal to the second timing parameter) for the first device to transmit the status report to the second device is more easily satisfied, thereby helping to reduce the transmission delay of data packets transmission in the AM.

In some implementations, the parameter value of the third timer includes a plurality of candidate values, and a current parameter value of the third timer is determined from the plurality of candidate values based on an indication from the second device or a network device. For example, the plurality of candidate values include a first parameter value and a second parameter value, and the second parameter value is smaller than the first parameter value. If the service of the data packet is a high-reliability and low-delay service, it indicates that the current data packet is relatively important, and the parameter value of the third timer may adopt the second parameter value to quickly trigger the transmission of the status report. If the service of the data packet is not a high-reliability and low-delay service, it indicates that a current data packet belongs to a normal service, and the parameter value of the third timer may adopt the first parameter value to trigger the transmission of the status report at a normal speed.

In some implementations, the second device (the transmitting side) or the network device may transmit a third message to the first device, where the third message is used to indicate that the current parameter value of the third timer is determined from the plurality of candidate values of the parameter values of the third timer. The third message includes one or more of the following messages: an MAC CE message, a DCI message, or an RLC control PDU message.

In some implementations, the above plurality of candidate values are a plurality of candidate values configured for a radio bearer (e.g., the SRB or DRB).

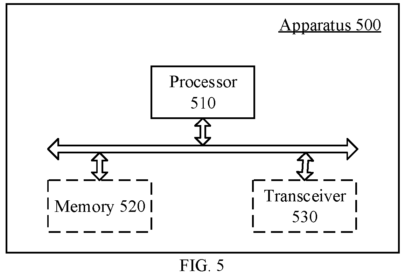

The method embodiments of the present application have been described in detail above with reference to FIGS. 1 to 3. The apparatus embodiments of the present application will be described in detail below with reference to FIGS. 4 and 5. It should be understood that the descriptions of the method embodiments and the apparatus embodiments correspond to each other; therefore, for parts that are not described in detail, reference may be made to the preceding method embodiments.

FIG. 4 is a schematic block diagram of a communication device according to the embodiments of the present application. The communication device illustrated in FIG. 4 is a first device, and the communication device 400 includes an execution unit 410.

The execution unit 410 is configured to perform a first operation, where first operation is associated with the transmission of a data packet in an RLC acknowledged mode.

In some implementations, the first operation includes retransmitting a first data packet in a case where no negative acknowledgment is received.

In some implementations, the first operation is triggered based on a first condition, and the first condition is associated with one or more of: a remaining delay of the first data packet; a priority of the first data packet; reliability of the first data packet; indication information transmitted by an upper layer of an RLC layer; a type of a radio bearer associated with the first data packet; channel measurement information; capability information of a transmitting device of the first data packet; capability information of a receiving device of the first data packet; indication information transmitted by a network device; whether packet duplication is configured for the first data packet; or indication information transmitted by an MAC layer.

In some implementations, the first condition includes one or more of the following conditions: the remaining delay of the first data packet is less than or equal to a first threshold; the priority of the first data packet is greater than or equal to a second threshold; the reliability of the first data packet is greater than or equal to a third threshold; the upper layer of the RLC layer indicates the RLC layer to perform retransmission; the first data packet is a data packet associated with an SRB; the first data packet is a data packet associated with a target radio bearer in a split bearer; channel quality is less than or equal to a fourth threshold; a channel busy rate is less than or equal to a fifth threshold; the transmitting device of the first data packet supports retransmitting the first data packet in a case where no negative acknowledgment for the first data packet is received; the receiving device of the first data packet supports receiving a retransmitted data packet of the data packet in a case where no negative acknowledgment is transmitted; the first data packet is a data packet corresponding to first configuration information transmitted by the network device; where the first configuration information is used to configure data packets that are allowed to be retransmitted in a case where no negative acknowledgment is received; packet duplication is not configured for the first data packet; or the indication information transmitted by the MAC layer indicates that there are available resources at the MAC layer.

In some implementations, the first configuration information is used to configure one or more of: that a data packet corresponding to a first radio bearer is allowed to be retransmitted in a case where no negative acknowledgment is received; that a data packet corresponding to a first RLC channel is allowed to be retransmitted in a case where no negative acknowledgment is received; or that a data packet corresponding to a first sequence number is allowed to be retransmitted in a case where no negative acknowledgment is received.

In some implementations, the communication device 400 further includes: a waiting unit 420, configured to, in a case where no negative acknowledgment is received, if a number of retransmissions of the first data packet is greater than or equal to a sixth threshold, wait, by the first device, for feedback information for the first data packet.

In some implementations, the communication device 400 further includes: a determination unit 430, configured to determine that an RLF occurs if a second condition is satisfied; where the second condition includes one or more of the following conditions: a number of retransmissions of the first data packet is greater than or equal to a seventh threshold, where the seventh threshold is greater than an eighth threshold, the eighth threshold is used to determine whether an RLF occurs, and the eighth threshold is a threshold for a number of retransmissions in a case where a negative acknowledgment for a data packet is received; a number of retransmissions of the first data packet is greater than or equal to a ninth threshold, and the number of retransmissions is a number of retransmissions in a case where a negative acknowledgment for the first data packet is received; or a number of negative acknowledgments corresponding to the first data packet is greater than or equal to a tenth threshold.

In some implementations, the first operation includes prioritizing transmission of a data packet with a smaller remaining delay.

In some implementations, the first operation includes: if a remaining delay of a second data packet is less than a remaining delay of a third data packet, prioritizing transmission of the second data packet; where the second data packet and the third data packet are two retransmitted data packets; the second data packet and the third data packet are two newly transmitted data packets; or one of the second data packet and the third data packet is a retransmitted data packet, and the other is a newly transmitted data packet.

In some implementations, the first operation includes transmitting polling information to a second device.

In some implementations, the polling information is triggered based on a third condition, the third condition is associated with a remaining delay of a fourth data packet, the fourth data packet is a data packet that has been transmitted by the first device, and the first device has not received feedback information for the fourth data packet.

In some implementations, the third condition includes that the remaining delay of the fourth data packet is less than or equal to an eleventh threshold.

In some implementations, the eleventh threshold is associated with one or more of: a radio bearer associated with the fourth data packet; a priority of the fourth data packet; channel measurement information; or whether packet duplication is configured for the fourth data packet.

In some implementations, the polling information is triggered based on a first counter, the first counter is used to record a number of unpolled PDUs and/or unpolled bytes, and a parameter value of the first counter is associated with a service type and/or a remaining delay of a data packet.

In some implementations, the parameter value of the first counter includes a plurality of candidate values, and a current parameter value of the first counter is determined from the plurality of candidate values based on a remaining delay of a data packet.

In some implementations, the plurality of candidate values are a plurality of candidate values configured for a radio bearer.

In some implementations, the polling information is transmitted based on an indication from a network device.

In some implementations, the polling information is associated with a first timer, and the first timer is configured to trigger transmission of the polling information.

In some implementations, the first operation includes transmitting a status report to a second device.

In some implementations, the status report is triggered based on a fourth condition, and the fourth condition is associated with one or more of:
whether a data packet reception failure is detected; a number of data packets that failed to be received; an amount of data that failed to be received; or a second timer configured to trigger transmission of a status report.

In some implementations, the fourth condition includes one or more of following conditions: the data packet reception failure is detected; the number of data packets that failed to be received is greater than or equal to a twelfth threshold; the amount of data that failed to be received is greater than or equal to a thirteenth threshold; or the second timer expires.

In some implementations, the status report is triggered based on a third timer, and a parameter value of the third timer is associated with a service type.

In some implementations, the parameter value of the third timer includes a plurality of candidate values, and a current parameter value of the third timer is determined from the plurality of candidate values based on an indication from the second device or a network device.

In some implementations, the plurality of candidate values are a plurality of candidate values configured for a radio bearer.

FIG. 5 is a schematic block diagram of an apparatus according to the embodiments of the present application. Dashed lines in FIG. 5 indicate that the unit or module is optional. The apparatus 500 can be used to implement the methods described in the above method embodiments. The apparatus 500 may be a chip or a communication device.

The apparatus 500 may include one or more processors 510. The processor 510 may support the apparatus 500 in implementing the methods described in the above method embodiments. The processor 510 may be a general-purpose processor or a special-purpose processor. For example, the processor may be a central processing unit (CPU). Alternatively, the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor.

The apparatus 500 may further include one or more memories 520. A program is stored on the memory 520, and the program may be executed by the processor 510, so as to enable the processor 510 to perform the methods described in the above method embodiments. The memory 520 may be independent of or integrated into the processor 510.

The apparatus 500 may further include a transceiver 530. The processor 510 may communicate with other devices or chips through the transceiver 530. For example, the processor 510 may transmit/receive data to/from other devices or chips through the transceiver 530.

The embodiments of the present application further provide a computer-readable storage medium configured to store a program. The computer-readable storage medium is applicable to a terminal device provided in the embodiments of the present application, and the program enables a computer to perform the methods performed by the terminal device in the various embodiments of the present application.

The embodiments of the present application further provide a computer program product. The computer program product includes a program. The computer program product is applicable to a terminal device provided in the embodiments of the present application, and the program enables a computer to perform the methods performed by the terminal device in the various embodiments of the present application.

The embodiments of the present application further provide a computer program. The computer program is applicable to a terminal device provided in the embodiments of the present application, and the computer program enables a computer to perform the methods performed by the terminal device in the various embodiments of the present application.

It should be understood that the terms "system" and "network" may be used interchangeably in the present application. In addition, the terms used in the present application are merely for explaining the specific embodiments of the present application, and not intended to limit the present application. Terms such as "first", "second", "third" and "fourth" in the description, claims, and the accompanying drawings of the present application are used to distinguish different objects rather than to describe a specific order. Furthermore, the terms "include" and "have", as well as any variations thereof, are intended to cover non-exclusive inclusion.

In the embodiments of the present application, the mentioned "indicate" may mean a direct indication or an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the embodiments of the present application, "B corresponding to A" indicates that B is associated with A, and B can be determined based on A. However, it should also be understood that determining B based on A does not mean that B is determined solely based on A, but that B can also be determined based on A and/or other information.

In the embodiments of the present application, the term "corresponding" may mean that there is a direct correspondence or an indirect correspondence between two elements, or may mean that there is an association relationship between two elements, or may mean a relationship of indicating and being indicated, or a relationship of configuring and being configured, or the like.

In the embodiments of the present application, "pre-defined" or "pre-configured" may be implemented by pre-storing corresponding code, tables, or other manners that can be used to indicate relevant information in a device (e.g., including a terminal device and a network device), and the present application does not limit the specific implementation thereof. For example, predefined may refer to being defined in a protocol.

In the embodiments of the present application, the "protocol" may refer to a standard protocol in the communication field, such as an LTE protocol, an NR protocol, and related protocols applied in future communication systems, which will not be limited in the present application.

In the embodiments of the present application, the term "and/or" is only an association relationship to describe associated objects, indicating that there may be three kinds of relationships. For example, A and/or B may represent three cases where: A exists alone, both A and B exist, and B exists alone. In addition, a character "/" herein generally indicates that the associated objects before and after this character are in an "or" relationship.

In the various embodiments of the present application, the magnitude of the serial numbers of the above processes does not indicate an execution order. The execution order of each process should be determined by its function and internal logic, and should not constitute any limitation on the implementation process of the embodiments of the present application.

In the several embodiments provided in the present application, it should be understood that the disclosed system, apparatus, and method may be implemented in other manners. For example, the described apparatus embodiments are merely illustrative. For instance, the division of the units is only a logical function division and there may be other division manners in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be electrical, mechanical, or in other forms.

The units described as separate components may or may not be physically separate, and the components shown as units may or may not be physical units, that is, they may be located in one place, or may be distributed over a plurality of network units. Some or all of the units may be selected according to actual requirements to achieve the purpose of the solutions of the embodiments.

In addition, the functional units in the various embodiments of the present application may be integrated into one processing unit, or each of the units may exist physically separately, or two or more units may be integrated into one unit.

In the above embodiments, all or part of the above embodiments may be implemented by software, hardware, firmware or any combination thereof. When implemented using software, all or part of the above embodiments may be implemented in a form of a computer program product. The computer program product includes one or more computer instructions. When the computer program instructions are loaded and executed on a computer, the process or the function described in the embodiments of the present application is generated in all or part. The computer may be a general purpose computer, a special purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center through wired method (e.g., coaxial cable, optical fiber, or digital subscriber line) or wireless method (e.g., infrared, radio, or microwave). The computer-readable storage medium may be any available medium that is capable of being read by the computer or a data storage device containing one or more available media integrated together, such as a server or a data center. The available medium may be a magnetic medium (e.g., a floppy disk, a hard disk, or a magnetic tape), an optical medium e.g., a digital video disc (DVD)), or a semiconductor medium (e.g., a solid state disk (SSD)).

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A wireless communication method, comprising:
performing, by a first device, a first operation; wherein the first operation is associated with transmission of a data packet in a radio link control (RLC) acknowledged mode.

2. The method according to claim 1, wherein the first operation comprises retransmitting a first data packet in a case where no negative acknowledgment for the first data packet is received.

3. The method according to claim 2, wherein the first operation is triggered based on a first condition, and the first condition is associated with one or more of:
a remaining delay of the first data packet;
a priority of the first data packet;
reliability of the first data packet;
indication information transmitted by an upper layer of an RLC layer;
a type of a radio bearer associated with the first data packet;
channel measurement information;
capability information of a transmitting device of the first data packet;
capability information of a receiving device of the first data packet;
indication information transmitted by a network device;
whether packet duplication is configured for the first data packet; or
indication information transmitted by a medium access control (MAC) layer.

4. The method according to claim 3, wherein the first condition comprises one or more of following conditions:
the remaining delay of the first data packet is less than or equal to a first threshold;
the priority of the first data packet is greater than or equal to a second threshold;
the reliability of the first data packet is greater than or equal to a third threshold;
the upper layer of the RLC layer indicates the RLC layer to perform retransmission;
the first data packet is a data packet associated with a signaling radio bearer (SRB);
the first data packet is a data packet associated with a target radio bearer in a split bearer;
channel quality is less than or equal to a fourth threshold;
a channel busy ratio is less than or equal to a fifth threshold;
the transmitting device of the first data packet supports retransmitting the first data packet in a case where no negative acknowledgment for the first data packet is received;
the receiving device of the first data packet supports receiving a retransmitted data packet of the data packet in a case where no negative acknowledgment for the first data packet is transmitted;
the first data packet is a data packet corresponding to first configuration information transmitted by the network device; wherein the first configuration information is used to configure data packets that are allowed to be retransmitted in a case where no negative acknowledgment is received;
packet duplication is not configured for the first data packet; or
the indication information transmitted by the MAC layer indicates that there are t available resources at the MAC layer.

5. The method according to claim 4, wherein the first configuration information is used to configure one or more of:
that a data packet corresponding to a first radio bearer is allowed to be retransmitted in a case where no negative acknowledgment is received;
that a data packet corresponding to a first RLC channel is allowed to be retransmitted in a case where no negative acknowledgment is received; or
that a data packet corresponding to a first sequence number is allowed to be retransmitted in a case where no negative acknowledgment is received.

6. The method according to any one of claims 2 to 5, further comprising:
in a case where no negative acknowledgment is received, if a number of retransmissions of the first data packet is greater than or equal to a sixth threshold, waiting, by the first device, for feedback information for the first data packet.

7. The method according to any one of claims 2 to 6, further comprising:
if a second condition is satisfied, determining, by the first device, that a radio link failure (RLF) occurs;
wherein the second condition comprises one or more of following conditions:
a number of retransmissions of the first data packet is greater than or equal to a seventh threshold, where the seventh threshold is greater than an eighth threshold, the eighth threshold is used to determine whether an RLF occurs, and the eighth threshold is a threshold for a number of retransmissions in a case where a negative acknowledgment for a data packet is received;
a number of retransmissions of the first data packet is greater than or equal to a ninth threshold, and the number of retransmissions is a number of retransmissions in a case where a negative acknowledgment for the first data packet is received; or
a number of negative acknowledgments corresponding to the first data packet is greater than or equal to a tenth threshold.

8. The method according to claim 1, wherein the first operation comprises prioritizing transmission of a data packet with a smaller remaining delay.

9. The method according to claim 8, wherein the first operation comprises:
if a remaining delay of a second data packet is less than a remaining delay of a third data packet, prioritizing transmission of the second data packet;
wherein the second data packet and the third data packet are two retransmitted data packets;
the second data packet and the third data packet are two newly transmitted data packets; or
one of the second data packet and the third data packet is a retransmitted data packet, and the other is a newly transmitted data packet.

10. The method according to claim 1, wherein the first operation comprises transmitting polling information to a second device.

11. The method according to claim 10, wherein the polling information is triggered based on a third condition, the third condition is associated with a remaining delay of a fourth data packet, the fourth data packet is a data packet that has been transmitted by the first device, and the first device has not received feedback information for the fourth data packet.

12. The method according to claim 11, wherein the third condition comprises that the remaining delay of the fourth data packet is less than or equal to an eleventh threshold.

13. The method according to claim 12, wherein the eleventh threshold is associated with one or more of:
a radio bearer associated with the fourth data packet;
a priority of the fourth data packet;
channel measurement information; or
whether packet duplication is configured for the fourth data packet.

14. The method according to claim 10, wherein the polling information is triggered based on a first counter, the first counter is used to record a number of unpolled protocol data units (PDUs) and/or a number of unpolled bytes, and a parameter value of the first counter is associated with a service type and/or a remaining delay of a data packet.

15. The method according to claim 14, wherein the parameter value of the first counter comprises a plurality of candidate values, and a current parameter value of the first counter is determined from the plurality of candidate values based on a remaining delay of a data packet.

16. The method according to claim 15, wherein the plurality of candidate values are a plurality of candidate values configured for a radio bearer.

17. The method according to claim 10, wherein the polling information is transmitted based on an indication from a network device.

18. The method according to any one of claims 10 to 17, wherein the polling information is associated with a first timer, and the first timer is configured to trigger transmission of the polling information.

19. The method according to claim 1, wherein the first operation comprises transmitting a status report to a second device.

20. The method according to claim 19, wherein the status report is triggered based on a fourth condition, and the fourth condition is associated with one or more of:
whether a data packet reception failure is detected;
a number of data packets that failed to be received;
an amount of data that failed to be received; or
a second timer, wherein the second timer is configured to trigger transmission of a status report.

21. The method according to claim 20, wherein the fourth condition comprises one or more of following conditions:
the data packet reception failure is detected;
the number of data packets that failed to be received is greater than or equal to a twelfth threshold;
the amount of data that failed to be received is greater than or equal to a thirteenth threshold; or
the second timer expires.

22. The method according to claim 19, wherein the status report is triggered based on a third timer, and a parameter value of the third timer is associated with a service type.

23. The method according to claim 22, wherein the parameter value of the third timer comprises a plurality of candidate values, and a current parameter value of the third timer is determined from the plurality of candidate values based on an indication from the second device or a network device.

24. The method according to claim 23, wherein the plurality of candidate values are a plurality of candidate values configured for a radio bearer.

25. A communication device, wherein the communication device is a first device, and the communication device comprises:
an execution unit, configured to perform a first operation; wherein the first operation is associated with transmission of a data packet in a radio link control (RLC) acknowledged mode.

26. The communication device according to claim 25, wherein the first operation comprises retransmitting a first data packet in a case where no negative acknowledgment for the first data packet is received.

27. The communication device according to claim 26, wherein the first operation is triggered based on a first condition, and the first condition is associated with one or more of:
a remaining delay of the first data packet;
a priority of the first data packet;
reliability of the first data packet;
indication information transmitted by an upper layer of an RLC layer;
a type of a radio bearer associated with the first data packet;
channel measurement information;
capability information of a transmitting device of the first data packet;
capability information of a receiving device of the first data packet;
indication information transmitted by a network device;
whether packet duplication is configured for the first data packet; or
indication information transmitted by a medium access control (MAC) layer.

28. The communication device according to claim 27, wherein the first condition comprises one or more of following conditions:
the remaining delay of the first data packet is less than or equal to a first threshold;
the priority of the first data packet is greater than or equal to a second threshold;
the reliability of the first data packet is greater than or equal to a third threshold;
the upper layer of the RLC layer indicates the RLC layer to perform retransmission;
the first data packet is a data packet associated with a signaling radio bearer (SRB);
the first data packet is a data packet associated with a target radio bearer in a split bearer;
channel quality is less than or equal to a fourth threshold;
a channel busy ratio is less than or equal to a fifth threshold;
the transmitting device of the first data packet supports retransmitting the first data packet in a case where no negative acknowledgment for the first data packet is received;
the receiving device of the first data packet supports receiving a retransmitted data packet of the data packet in a case where no negative acknowledgment for the first data packet is transmitted;
the first data packet is a data packet corresponding to first configuration information transmitted by the network device; wherein the first configuration information is used to configure data packets that are allowed to be retransmitted in a case where no negative acknowledgment is received;
packet duplication is not configured for the first data packet; or
the indication information transmitted by the MAC layer indicates that there are available resources at the MAC layer.

29. The communication device according to claim 28, wherein the first configuration information is used to configure one or more of:
that a data packet corresponding to a first radio bearer is allowed to be retransmitted in a case where no negative acknowledgment is received;
that a data packet corresponding to a first RLC channel is allowed to be retransmitted in a case where no negative acknowledgment is received; or
that a data packet corresponding to a first sequence number is allowed to be retransmitted in a case where no negative acknowledgment is received.

30. The communication device according to any one of claims 26 to 29, wherein the communication device further comprises:
a waiting unit, configured to, in a case where no negative acknowledgment is received, if a number of retransmissions of the first data packet is greater than or equal to a sixth threshold, wait, by the first device, for feedback information for the first data packet.

31. The communication device according to any one of claims 26 to 29, wherein the communication device further comprises:
a determining unit, configured to determine that a radio link failure (RLF) occurs if a second condition is satisfied;
wherein the second condition comprises one or more of following conditions:
a number of retransmissions of the first data packet is greater than or equal to a seventh threshold, the seventh threshold is greater than an eighth threshold, the eighth threshold is used to determine whether an RLF occurs, and the eighth threshold is a threshold for a number of retransmissions in a case where a negative acknowledgment for a data packet is received;
a number of retransmissions of the first data packet is greater than or equal to a ninth threshold, and the number of retransmissions is a number of retransmissions in a case where a negative acknowledgment for the first data packet is received; or
a number of negative acknowledgments corresponding to the first data packet is greater than or equal to a tenth threshold.

32. The communication device according to claim 25, wherein the first operation comprises prioritizing transmission of a data packet with a smaller remaining delay.

33. The communication device according to claim 32, wherein the first operation comprises:
if a remaining delay of a second data packet is less than a remaining delay of a third data packet, prioritizing transmission of the second data packet;
wherein the second data packet and the third data packet are two retransmitted data packets;
the second data packet and the third data packet are two newly transmitted data packets; or
one of the second data packet and the third data packet is a retransmitted data packet, and the other is a newly transmitted data packet.

34. The communication device according to claim 25, wherein the first operation comprises transmitting polling information to a second device.

35. The communication device according to claim 34, wherein the polling information is triggered based on a third condition, the third condition is associated with a remaining delay of a fourth data packet, the fourth data packet is a data packet that has been transmitted by the first device, and the first device has not received feedback information for the fourth data packet.

36. The communication device according to claim 35, wherein the third condition comprises that the remaining delay of the fourth data packet is less than or equal to an eleventh threshold.

37. The communication device according to claim 36, wherein the eleventh threshold is associated with one or more of:
a radio bearer associated with the fourth data packet;
a priority of the fourth data packet;
channel measurement information; or
whether packet duplication is configured for the fourth data packet.

38. The communication device according to claim 34, wherein the polling information is triggered based on a first counter, the first counter is used to record a number of unpolled protocol data units (PDUs) and/or a number of unpolled bytes, and a parameter value of the first counter is associated with a service type and/or a remaining delay of a data packet.

39. The communication device according to claim 38, wherein the parameter value of the first counter comprises a plurality of candidate values, and a current parameter value of the first counter is determined from the plurality of candidate values based on a remaining delay of a data packet.

40. The communication device according to claim 39, wherein the plurality of candidate values are a plurality of candidate values configured for a radio bearer.

41. The communication device according to claim 34, wherein the polling information is transmitted based on an indication from a network device.

42. The communication device according to any one of claims 34 to 41, wherein the polling information is associated with a first timer, and the first timer is configured to trigger transmission of the polling information.

43. The communication device according to claim 25, wherein the first operation comprises transmitting a status report to a second device.

44. The communication device according to claim 43, wherein the status report is triggered based on a fourth condition, and the fourth condition is associated with one or more of:
whether a data packet reception failure is detected;
a number of data packets that failed to be received;
an amount of data that failed to be received; or
a second timer, wherein the second timer is configured to trigger transmission of a status report.

45. The communication device according to claim 44, wherein the fourth condition comprises one or more of following conditions:
the data packet reception failure is detected;
the number of data packets that failed to be received is greater than or equal to a twelfth threshold;
the amount of data that failed to be received is greater than or equal to a thirteenth threshold; or
the second timer expires.

46. The communication device according to claim 43, wherein the status report is triggered based on a third timer, and a parameter value of the third timer is associated with a service type.

47. The communication device according to claim 46, wherein the parameter value of the third timer comprises a plurality of candidate values, and a current parameter value of the third timer is determined from the plurality of candidate values based on an indication from the second device or a network device.

48. The communication device according to claim 47, wherein the plurality of candidate values are a plurality of candidate values configured for a radio bearer.

49. A communication device, comprising a transceiver, a memory, and a processor; wherein the memory is configured to store a program, and the processor is configured to call the program from the memory and control the transceiver to receive or transmit a signal, to enable the terminal to perform the method according to any one of claims 1 to 24.

50. An apparatus, comprising: a processor, configured to call a program from a memory, to enable the apparatus to perform the method according to any one of claims 1 to 24.

51. A chip, comprising: a processor, configured to call a program from a memory, to enable a device equipped with the chip to perform the method according to any one of claims 1 to 24.

52. A computer-readable storage medium, having a program stored thereon, wherein the program enables a computer to perform the method according to any one of claims 1 to 24.

53. A computer program product, comprising a program, wherein the program enables a computer to perform the method according to any one of claims 1 to 24.

54. A computer program, wherein the computer program enables a computer to perform the method according to any one of claims 1 to 24.
